(19) Europäisches Patentamt

European Patent Office

Office européen des brevets

(11) **EP 2 567 537 B1**

(12) **FASCICULE DE BREVET EUROPEEN**

(45) Date de publication et mention
de la délivrance du brevet:
**25.11.2015 Bulletin 2015/48**

(51) Int Cl.:
***H04N 5/33*** *(2006.01)*     ***G02B 13/00*** *(2006.01)*

(21) Numéro de dépôt: **11723533.3**

(22) Date de dépôt: **28.04.2011**

(86) Numéro de dépôt international:
**PCT/FR2011/050977**

(87) Numéro de publication internationale:
**WO 2011/138541 (10.11.2011 Gazette 2011/45)**

(54) **PROCEDE D'IMAGERIE POLYCHROME**

POLYCHROMATISCHES BILDGEBUNGSVERFAHREN

POLYCHROMATIC IMAGING METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **04.05.2010 FR 1053450**

(43) Date de publication de la demande:
**13.03.2013 Bulletin 2013/11**

(73) Titulaire: **Airbus Defence and Space SAS
78130 Les Mureaux (FR)**

(72) Inventeurs:
• **BROUARD, Laurent
F-31000 Toulouse (FR)**

• **TOURNEUR, Cyrille
F-31000 Toulouse (FR)**

(74) Mandataire: **Cabinet Plasseraud
52, rue de la Victoire
75440 Paris Cedex 09 (FR)**

(56) Documents cités:
**JP-A- 5 066 370**     **US-A1- 2004 119 020
US-A1- 2006 054 782**

• **"KODAK KAI-2020 Rev 2.1 Device Performance
Specification", , 6 June 2005 (2005-06-06), pages
1-49, XP055144939, Retrieved from the Internet:
URL:http://www.stargazing.net/david/QSI/KA l-
2020LongSpec.pdf [retrieved on 2014-10-07]**

**Description**

La présente invention concerne un procédé d'imagerie polychrome, qui utilise une optique de prise de vues embarquée à bord d'un aéronef ou d'un engin spatial tel qu'un satellite. Elle concerne aussi un système d'imagerie polychrome qui est adapté pour mettre en oeuvre un tel procédé.

L'imagerie qui est réalisée à partir d'un aéronef ou d'un satellite présente des contraintes spécifiques qui n'existent pas pour d'autres domaines tels que la photographie destinée au grand public. Parmi ces contraintes, on peut citer :

- la nécessité d'utiliser un instrument de prise de vues à très grande distance, tel qu'un télescope ;

- la recherche d'une bonne résolution, c'est-à-dire une résolution fine, malgré la très grande distance de prise de vues ;

- la réduction du poids et de l'encombrement de l'instrument de prise de vues, qui dépend dans une grande mesure des dimensions des composants optiques qui sont utilisés pour l'optique de prise de vues ;

- les mouvements parasites de l'aéronef ou du satellite, qui sont transmis à l'instrument de prise de vues ;

- à l'exception des satellites géostationnaires, le défilement d'une portion de la surface de la Terre qui est photographiée, par rapport à l'aéronef ou au satellite ; et

- la nécessité de réduire la quantité des données qui sont transmises vers la Terre pour une même image saisie.

De façon usuelle, les paramètres suivants sont utilisés pour quantifier les performances d'un système d'imagerie :

- la résolution, qui est aussi désignée par GSD pour «Ground Sample Distance» en anglais, pour un système d'imagerie embarqué à bord d'un aéronef ou d'un satellite. Il s'agit de la distance minimale entre deux points de la portion de surface terrestre qui est photographiée, pour que ces points apparaissent séparément dans l'image saisie. Elle est égale à la dimension des photodétecteurs de la matrice considérée, divisée par la distance focale («focal length» en anglais) de l'optique de prise de vues qui est utilisée, et multipliée par la distance entre l'objet et l'image : $GSD = (p/D_{foc}) \times H$, où $p$ est le pas des photodétecteurs, $D_{foc}$ la distance focale et $H$ la distance entre l'objet et l'image ;

- la fréquence de Nyquist, qui est notée $\nu_N$ et qui est égale à l'inverse du double du pas de l'échantillonnage d'une vue que réalise une matrice de photodétecteurs lors de la saisie d'une image de cette vue. Autrement dit : $\nu_N = 1/(2 \times GSD)$ dans l'espace objet, ou $\nu_N = 1/(2 \times p)$ dans l'espace image. La fréquence de Nyquist ne dépend donc que de la dimension des photodétecteurs de la matrice et de la distance focale de l'optique de prise de vues ;

- la fonction de transfert de modulation, qui est désignée par FTM et qui caractérise la variation de contraste entre l'image et l'objet photographié, lorsque cet objet présente une variation spatiale d'intensité lumineuse. La fonction de transfert de modulation dépend de la fréquence spatiale de la variation d'intensité lumineuse de l'objet, et de la longueur d'onde du rayonnement qui est détecté ; et

- la fréquence de coupure de l'optique de prise de vues, qui est notée $\nu_C$ et qui est la fréquence spatiale de la variation d'intensité lumineuse de l'objet pour laquelle la fonction de transfert de modulation s'annule, pour la longueur d'onde du rayonnement qui est détecté.

La fonction de transfert de modulation résulte de plusieurs contributions, parmi lesquelles figurent :

- une contribution de l'optique de prise de vues, qui dépend de la diffraction lumineuse causée par sa pupille et des aberrations optiques de cet instrument ;

- une contribution des photodétecteurs, qui dépend des performances individuelles de chaque photodétecteur et d'une diaphonie («cross-tatk» en anglais) qui peut intervenir entre des photodétecteurs différents ; et

- une contribution des mouvements et des vibrations de l'aéronef ou du satellite pendant la durée d'exposition d'une saisie d'image.

Toutefois, la fréquence de coupure $\nu_C$ est une caractéristique de l'optique de prise de vues seulement, dépendant du diamètre de la pupille, de la distance focale et de la longueur d'onde considérée. Etant donné que la fréquence de coupure dépend essentiellement de la diffraction du rayonnement par la pupille de cette optique, elle décroît en fonction de la longueur d'onde du rayonnement qui est transmis par cette optique. Par conséquent, lorsqu'une vue est saisie, qui est formée à partir d'un rayonnement contenant plusieurs longueurs d'onde, la fréquence de coupure $\nu_C$ résultante est celle qui correspond à la plus grande de ces longueurs d'onde. Seules les variations d'intensité lumineuse de l'objet qui possèdent des fréquences spatiales inférieures à la fréquence de coupure $\nu_C$ sont transmises par l'optique de prise de vues.

En général, un instrument de prise de vues qui est destiné à être utilisé à bord d'un aéronef ou d'un satellite, le plus souvent le télescope lui-même, est conçu à partir d'une valeur qui est voulue pour la résolution. Cette valeur de résolution détermine le couple de paramètres qui est constitué par la distance focale de l'optique de prise de vues et la dimension des photodétecteurs de la matrice de détection d'image qui est utilisée. Puis, les dimensions de la pupille d'entrée de l'optique de prise de vues sont déterminées, avec d'autres paramètres, afin que la diffraction lumineuse qui est causée par cette pupille soit compatible avec la valeur de résolution voulue. Pour cela, la pupille est dimensionnée pour que la fréquence de coupure $\nu_C$ soit supérieure à la fréquence de Nyquist $\nu_N$.

Par ailleurs, de nombreux systèmes d'imagerie existent déjà, qui sont adaptés pour saisir une image d'une portion de la surface terrestre avec une information de couleur. Usuellement, plusieurs images de la même portion de surface terrestre sont saisies à travers des filtres qui correspondent à des couleurs différentes, puis les images qui ont été saisies respectivement pour ces couleurs sont superposées, de façon à obtenir une image reconstruite qui est polychrome. Dans la technique d'imagerie polychrome qui est désignée par «PANsharpening», un des filtres est dit à large bande, ou «PANchromatique», car il contient l'ensemble des couleurs respectives des autres filtres. L'image correspondant au filtre PANchromatique est en plus saisie avec une valeur de résolution qui est plus fine que celles des images monochromes. Cette image PANchromatique contient par conséquent l'information de structure de chacune des autres couleurs. La résolution de l'image polychrome reconstruite correspond alors à la plus petite des valeurs de résolution individuelle des images qui sont superposées, c'est-à-dire à la résolution la plus fine, qui est celle de l'image PANchromatique. L'instrument de prise de vues, et notamment son diamètre pupillaire, est alors dimensionné en fonction de cette valeur la plus petite des résolutions des images individuelles qui sont saisies. Ce dimensionnement est alors excessif pour les images monochromes qui ont des résolutions individuelles supérieures, c'est-à-dire des résolutions moins fines. En outre, la quantité de données qui correspond à l'image polychrome reconstruite est égale à la somme des quantités de données de chaque image individuelle qui est saisie, multipliée par le nombre de filtres utilisés. La quantité totale de données qui correspond à une image polychrome reconstruite est donc augmentée.

Dans le domaine de la photographie destinée au grand public, qui est distinct de celui de la photographie à partir d'un aéronef ou d'un engin spatial pour les raisons qui ont été énumérées plus haut, une image trichromatique est saisie en une seule exposition. Pour cela, chaque photodétecteur de la matrice est individuellement combiné avec un filtre de couleur, qui peut être bleu, vert ou rouge. Lorsqu'un même nombre de photodétecteurs est dédié à chaque couleur de filtre, la résolution de l'appareil photographique correspond à celle de la matrice pour chaque couleur.

Le document US 3,971,065 propose une affectation particulière des photodétecteurs de la matrice de détection d'image aux couleurs bleue, verte et rouge : un photodétecteur sur deux est associé au filtre vert, un photodétecteur sur quatre est associé au filtre bleu, et un photodétecteur sur quatre est associé au filtre rouge. La résolution de l'image qui est associée à la couleur verte correspond alors au pas de la matrice utilisée, multiplié par $\sqrt{2}$, tandis que les résolutions qui sont associées aux couleurs bleue et rouge correspondent chacune au double du pas de la matrice utilisée. Ainsi, la couleur verte est privilégiée pour réduire la valeur de la résolution de l'image polychrome reconstruite. Comme cette couleur verte est proche du maximum de la sensibilité spectrale de l'oeil humain, l'image polychrome qui est reconstruite en superposant les images des trois couleurs a sensiblement la résolution de la couleur verte.

Le document US 2009/0051984 décrit une amélioration du procédé de saisie d'image de US 3,971,065. Cette amélioration consiste à ajouter des photodétecteurs qui sont consacrés à l'acquisition d'une image en couleur blanche, ou PANchromatique, en plus des images monochromes qui sont saisies par les photodétecteurs associés aux filtres vert, bleu et rouge.

Le document US 2006/054782 concerne l'acquisition d'images polychromes en utilisant plusieurs voies optiques qui sont agencées en parallèle, et qui sont respectivement dédiées à des couleurs différentes. Les caractéristiques de chaque voie optique, y compris la résolution, le nombre de pixels utilisés et les caractéristiques de l'optique de formation d'image, sont optimisées séparément pour chaque voie en fonction de la longueur d'onde correspondante.

Enfin, le document JP 5-066370 concerne un filtre passe-bas du type réseau de phase, à placer sur un chemin de détection d'image. La fonction de modulation de transfert du filtre est supérieure pour la couleur verte par rapport aux couleurs bleue et rouge.

Dans ces conditions, un but de l'invention consiste à réduire les dimensions d'un instrument de prise de vues qui est embarqué à bord d'un aéronef ou d'un engin spatial, sans réduire la résolution d'images polychromes qui sont obtenues avec cet instrument. Ce but concerne notamment le télescope qui constitue en général la partie la plus volumineuse et la plus lourde de l'instrument de prise de vues.

Un autre but de l'invention consiste à améliorer la résolution apparente d'un système d'imagerie polychrome qui est utilisé pour saisir des images de la Terre à partir d'un aéronef ou d'un engin spatial, sans augmenter les dimensions de la pupille de l'instrument de prise de vues par rapport aux systèmes d'imagerie connus.

Un autre but encore consiste à améliorer le rendu visuel d'une image polychrome qui est obtenue à partir d'un aéronef ou d'un engin spatial.

Un autre but encore consiste à améliorer la fonction de transfert de modulation d'un système d'imagerie qui est adapté pour saisir des images de la Terre à partir d'un aéronef ou d'un engin spatial, pour une dimension fixée de la pupille de l'instrument de prise de vues qui est utilisé.

Un autre but enfin consiste à réduire la quantité de données à transmettre pour une image polychrome, pour une même valeur de résolution de cette image polychrome.

Pour atteindre ces buts et d'autres, l'invention propose un nouveau procédé d'imagerie polychrome dans la bande spectrale d'observation de 360 nm (nanomètre) à 950 nm, qui est conforme à la revendication 1. Ce procédé utilise une optique de prise de vues qui comprend un télescope et qui est adaptée pour former des vues dans au moins un plan focal, respectivement à partir de rayonnements qui appartiennent à plusieurs sous-bandes spectrales comprises chacune dans la bande spectrale d'observation.

Le procédé comprend les étapes suivantes :

/1/ embarquer l'optique de prise de vues comprenant le télescope à bord d'un aéronef ou d'un satellite ;

/2/ placer au moins une matrice de photodétecteurs dans ledit au moins un plan focal, pour saisir une image intermédiaire de chaque vue qui est formée par l'optique de prise de vues, avec une résolution qui est associée à cette image intermédiaire ;

/3/ saisir les images intermédiaires d'une même scène, respectivement pour chaque sous-bande spectrale ; et

/4/ fusionner les images intermédiaires qui ont été saisies respectivement pour les sous-bandes spectrales, afin de former une image finale polychrome.

Selon une première caractéristique de l'invention, les sous-bandes spectrales qui sont utilisées comprennent une première sous-bande spectrale et au moins une autre sous-bande spectrale étendue vers les grandes longueurs d'onde, cette dernière possédant au moins une longueur d'onde qui est plus grande qu'une limite supérieure de la première sous-bande spectrale. Eventuellement, d'autres sous-bandes spectrales peuvent aussi être utilisées pour former l'image finale polychrome, en plus de la première sous-bande et de celle dite étendue vers les grandes longueurs d'onde.

Selon une seconde caractéristique de l'invention, le télescope de l'optique de prise de vues détermine une pupille qui est commune aux sous-bandes spectrales, et une dimension de cette pupille commune fixe une fréquence spatiale de coupure qui est différente pour chaque sous-bande spectrale. La pupille est alors dimensionnée de sorte que la fréquence spatiale de coupure pour la première sous-bande spectrale soit supérieure à la fréquence de Nyquist de l'image intermédiaire qui est saisie pour cette première sous-bande spectrale. Autrement dit, l'information qui est contenue dans l'image intermédiaire qui est saisie pour la première sous-bande spectrale, est limitée par l'échantillonnage de la vue correspondante qui est réalisé par les photodétecteurs.

Selon une troisième caractéristique de l'invention, chaque sous-bande spectrale est déterminée par un seul filtre qui affecte tous les phodétecteurs qui sont utilisés pour saisir l'image intermédiaire correspondante, en s'étendant continûment entre des points de la vue concernée qui sont imagés sur ces photodétecteurs.

Selon une quatrième caractéristique de l'invention, la pupille du télescope est en outre dimensionnée de sorte que la fréquence spatiale de coupure pour ladite autre sous-bande spectrale étendue vers les grandes longueurs d'onde, soit inférieure à la fréquence de Nyquist de l'image intermédiaire qui est saisie pour la première sous-bande spectrale. Autrement dit, l'image intermédiaire de cette autre sous-bande qui est étendue vers les grandes longueurs d'onde, ne contient pas d'information d'image à la résolution de la première sous-bande, au moins pour la longueur d'onde qui est située au delà de la première sous-bande.

Selon une cinquième caractéristique de l'invention, l'image intermédiaire qui est saisie pour la première sous-bande spectrale est formée en utilisant un pas d'échantillonnage de la vue correspondante, qui est deux fois plus petit qu'un autre pas d'échantillonnage utilisé pour saisir l'image intermédiaire de l'autre sous-bande spectrale étendue vers les grandes longueurs d'onde, les dits pas d'échantillonnage étant mesurés parallèlement à des lignes et des colonnes des photodétecteurs. De cette façon, l'échantillonnage pour la première sous-bande spectrale correspond à une densité surfacique qui est quatre fois plus importante que l'échantillonnage pour l'autre sous-bande spectrale étendue vers les grandes longueurs d'onde.

Ainsi, l'invention propose de réduire la taille de l'optique de prise de vues en dessous de ce qui est nécessaire pour obtenir une information d'image maximale, pour toutes les sous-bandes spectrales. Une diminution importante en résulte pour le poids et l'encombrement de l'optique de prise de vues, et en particulier du télescope lui-même. Le coût de cette optique est donc réduit en conséquence, et l'engin porteur qui est utilisé, aéronef ou engin spatial, peut aussi être plus petit. Dans le cas d'un satellite porteur, son coût de lancement est aussi réduit.

Néanmoins, l'image finale polychrome qui est reconstruite à l'étape /4/ possède la résolution qui est la plus fine entre celle qui est obtenue pour la première sous-bande spectrale et celle qui est obtenue pour la sous-bande spectrale étendue vers les grandes longueurs d'onde. Ces résolutions des images intermédiaires sont choisies de préférence pour que la plus fine soit celle de l'image intermédiaire qui est saisie pour la première sous-bande spectrale.

Selon un mode de mise en oeuvre préféré de l'invention, la première sous-bande spectrale comprend la longueur d'onde 550 nm. En effet, cette longueur d'onde, qui est associée à la couleur verte, est proche du maximum de la sensibilité spectrale de l'oeil humain. Ainsi, un observateur de l'image finale perçoit bien les détails de celle-ci à la résolution de l'image intermédiaire qui est saisie pour la première sous-bande spectrale, même si ces détails ne sont pas résolus dans l'image intermédiaire qui est saisie pour la sous-bande étendue vers les grandes longueurs d'onde. Néanmoins, cette dernière image intermédiaire participe à la restitution des couleurs, si bien que le rendu polychrome de l'image finale est satisfaisant.

De plus, le procédé de l'invention peut être particulièrement avantageux lorsque la scène dont les images intermédiaires sont saisies à l'étape /3/ est une portion de surface de la Terre. Tel est le cas, tout particulièrement, lorsque la première sous-bande spectrale correspond à la couleur verte. En effet, cette couleur correspond aussi sensiblement au maximum d'intensité spectrale de la lumière visible qui est réfléchie par la surface de la Terre vers l'espace, en dehors des zones qui sont masquées par des nuages.

Pour obtenir un rendu polychrome complet de l'image finale, les sous-bandes spectrales sont réparties avantageusement de la façon suivante : la première sous-bande correspond à la couleur verte, l'autre sous-bande spectrale qui est étendue vers les grandes longueurs d'onde correspond à une couleur rouge, et encore une autre sous-bande spectrale correspond à une couleur bleue. Néanmoins, pour une mise en oeuvre de l'invention, il n'est pas nécessaire que la résolution de l'image intermédiaire qui est saisie pour la couleur bleue, soit celle de la couleur verte. Autrement dit, la sous-bande bleue peut n'être utilisée que pour participer au rendu polychrome de l'image finale, sans participer à sa résolution qui n'est produite que par la sous-bande verte.

L'invention propose aussi un système d'imagerie polychrome qui est adapté pour mettre en oeuvre un procédé tel que décrit précédemment, et notamment pour être embarqué à bord d'un aéronef ou d'un satellite. Un tel système comprend notamment :

- l'optique de prise de vues comprenant le télescope ;

- ladite au moins une matrice de photodétecteurs ;

- une unité de commande, qui est adaptée pour contrôler une saisie des images intermédiaires d'une même scène respectivement pour chaque sous-bande spectrale ; et

- une unité de reconstruction d'image, qui est adaptée pour fusionner les images intermédiaires saisies respectivement pour les sous-bandes spectrales, afin de former l'image finale polychrome.

Les sous-bandes spectrales, les filtres, la dimension de la pupille du télescope et les pas d'échantillonnage sont sélectionnées pour ce système d'imagerie polychrome de la façon qui a été décrite plus haut pour le procédé.

D'autres particularités et avantages de la présente invention apparaîtront dans la description ci-après de trois exemples de mise en oeuvre non limitatifs, en référence aux dessins annexés, dans lesquels :

- la figure 1 représente un satellite d'observation de la Terre, à bord duquel l'invention peut être utilisée ;

- la figure 2a illustre un premier mode de saisie d'images intermédiaires, qui est compatible avec l'invention ;

- les figures 2b et 2c illustrent une utilisation d'une matrice de photodétecteurs, pour le premier mode de saisie d'images intermédiaires de la figure 2a ;

- la figure 3a correspond à la figure 2a pour un deuxième mode de saisie d'images intermédiaires, qui est aussi compatible avec l'invention ;

- la figure 3b correspond aux figures 2b et 2c pour le second mode de saisie d'images intermédiaires de la figure 3a ; et

- la figure 4 correspond à la figure 2a pour un troisième mode de saisie d'images intermédiaires, qui est encore compatible avec l'invention.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

L'invention est maintenant décrite à titre d'illustration pour des images de portions de la surface de la Terre qui sont prises à partir d'un satellite. Mais il est entendu qu'elle peut être appliquée à des images du sol qui sont prises à partir de tout engin porteur situé en altitude, qu'il soit stationnaire ou en mouvement. En particulier, l'invention peut être appliquée pour des images qui sont saisies à partir de tout aéronef, y compris des avions sans pilote.

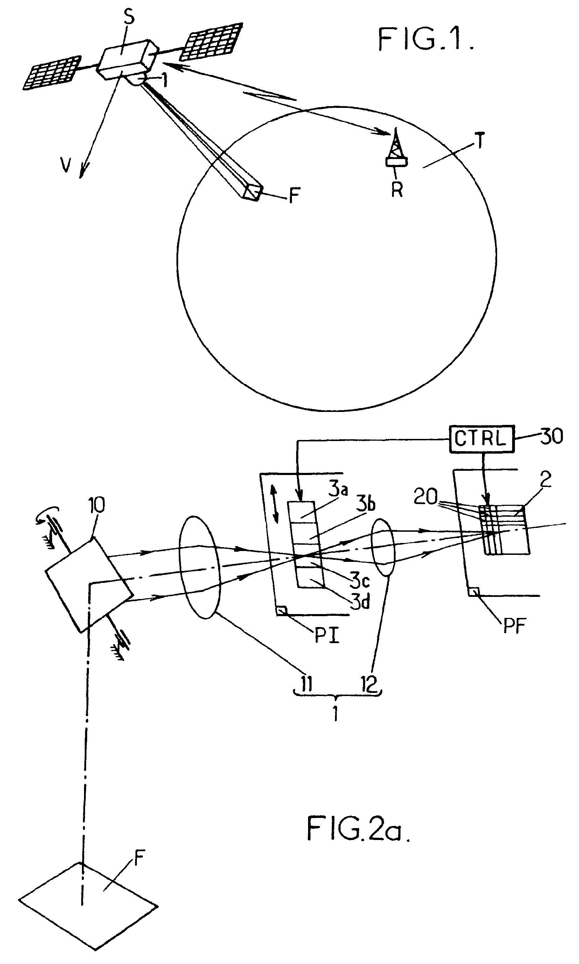

Conformément à la figure 1, un satellite S est en orbite autour de la Terre, qui est désignée par T. L'altitude du satellite S peut être quelconque. Ce peut être en particulier un satellite géostationnaire ou un satellite à basse altitude, dit à orbite défilante. Le satellite S est équipé d'un instrument de prise de vues. Celui-ci possède un champ d'entrée optique qui est orienté vers une portion F de la surface de la Terre, qui doit être photographiée. La flèche désigne la vitesse angulaire relative V du satellite S par rapport à la portion de surface terrestre F. Cette vitesse est nulle pour un satellite géostationnaire.

De façon usuelle et en référence à la figure 2a, l'instrument de prise de vues comprend une optique de prise de vues 1, une matrice 2 de photodétecteurs 20, et plusieurs filtres de couleurs, par exemple quatre filtres 3a-3d.

L'optique de prise de vues 1 peut être d'un type quelconque opérationnel dans toute la bande de lumière visible et au delà, par exemple entre 360 nm et 950 nm. Elle peut comprendre une optique d'entrée 11 formant collecteur de rayonnement et une optique de refocalisation 12, avec un plan de focalisation intermédiaire qui est noté PI. Sur les figures 2a, 3a et 4, les optiques 11 et 12 sont représentées par simplicité sous forme de lentilles, mais il est entendu qu'il s'agit le plus souvent de miroirs. En général, les optiques 11 et 12 ont chacune une structure complexe à plusieurs composants réflecteurs et/ou réfractifs. Dans le cadre de la présente invention, l'optique d'entrée 11 est un télescope, qui peut être d'un type quelconque utilisé dans le domaine de l'imagerie spatiale.

Les photodétecteurs 20 sont sensibles dans toute la bande spectrale d'observation, entre 360 nm et 950 nm. La matrice 2 peut être rectangulaire ou carrée, par exemple de 1024 x 1024 photodétecteurs. Les photodétecteurs 20 sont disposés en lignes et en colonnes qui sont juxtaposées selon deux directions perpendiculaires. La matrice 2 est placée dans le plan focal PF de l'optique de prise de vues 1.

Le pointage de l'instrument de prise de vues vers la portion de surface terrestre F peut être réalisé de plusieurs façons. Par exemple, le satellite S peut être tourné dans son ensemble pour amener un axe de visée optique de l'instrument sur un point central de la portion F. Une autre méthode consiste à monter l'instrument sur un support intermédiaire qui est orientable par rapport à la plateforme principale du satellite S. Le pointage de l'instrument est alors réalisé en actionnant le mécanisme d'orientation du support intermédiaire. Une autre méthode encore consiste à disposer un miroir orientable 10 devant l'entrée de l'optique de prise de vues 1, et à ajuster l'orientation du miroir 10 de sorte que des rayons lumineux qui proviennent de la portion de surface terrestre F soient réfléchis par ce miroir 10 vers l'optique d'entrée 11. Eventuellement, une séquence d'images multiples peut être acquise selon le procédé dit «push-broom», connu de l'Homme du métier. Dans un tel procédé, le défilement du satellite S au dessus du sol est utilisé pour réaliser un balayage de la surface de la Terre perpendiculairement à la vitesse V du satellite.

L'instrument de prise de vues peut comprendre en outre un module de codage et d'émission, désigné plus simplement par émetteur (non représenté), pour transmettre des données correspondant aux images saisies à un récepteur R d'une station de réception située sur la Terre (figure 1). Ces données transmises sont obtenues à partir de signaux de lecture des photodétecteurs 20. Le récepteur R délivre alors ces données d'image intermédiaire à une unité de reconstruction d'image (non représentée).

Pour raison de simplicité, on considérera dans la suite que les bords de la matrice 2 des photodétecteurs 20 déterminent la limite périphérique de la portion de surface terrestre F qui est photographiée à chaque exposition. Alternativement, un diaphragme de champ qui est placé dans le plan de focalisation intermédiaire PI peut déterminer cette limite de la portion F.

De façon connue, une image polychrome de la portion de surface terrestre F peut être obtenue à partir de plusieurs images monochromes de cette même portion, en superposant ces dernières. Pour cela, chaque image monochrome, dite image intermédiaire, est saisie pour une sous-bande spectrale différente qui est comprise dans la bande d'observation, à travers un filtre qui détermine cette sous-bande. Par exemple, quatre filtres 3a-3d peuvent être placés sur le chemin des rayons lumineux qui parviennent sur la matrice 2 à travers l'optique de prise de vues 1. Ces filtres peuvent être situés dans le plan de focalisation intermédiaire PI, comme représenté, mais il peut être préférable de les placer en dehors de ce plan, notamment dans un plan de pupille ou à proximité d'une matrice de photodétecteurs qui est utilisée. A titre d'illustration, le filtre 3a peut déterminer une sous-bande spectrale correspondant à la couleur bleue, de 450 à 500 nm, le filtre 3b peut déterminer une autre sous-bande correspondant à la couleur verte, de 520 à 560 nm, le filtre 3c encore une autre sous-bande correspondant à la couleur jaune, de 570 à 630 nm, et le filtre 3d à une dernière sous-bande qui correspond à la couleur rouge, de 640 à 680 nm.

De façon générale, l'invention peut être mise en oeuvre avec un nombre quelconque n de sous-bandes spectrales à l'intérieur de la bande d'observation, n étant un entier qui est supérieur ou égal à deux. Chaque sous-bande spectrale a de préférence une largeur qui est inférieure à 100 nm, voire inférieure à 60 nm. Une telle sous-bande est spectralement étroite, si bien que l'image intermédiaire correspondante est considérée comme étant monochrome ou quasi-monochrome.

Pour mettre en oeuvre l'invention, l'une des sous-bandes spectrales est limitée à des longueurs d'onde plus courtes par rapport à au moins une autre des sous-bandes, à l'intérieur de la bande spectrale d'observation. La sous-bande qui est limitée à des longueurs d'onde plus courtes est appelée première sous-bande spectrale dans la partie générale de cette description, et l'autre sous-bande est dite étendue vers les grandes longueurs d'onde. De préférence, la première sous-bande contient la couleur verte, c'est-à-dire la longueur d'onde 550 nm. Par exemple, cette première sous-bande est comprise entre 400 et 600 nm, de préférence entre 510 et 570 nm. Ce peut être l'intervalle spectral qui s'étend de 520 nm à 560 nm, introduit précédemment pour le filtre 3b. La sous-bande qui est étendue vers les grandes longueurs d'onde peut contenir la longueur d'onde 650 nm, correspondant à la couleur rouge. Elle peut être l'intervalle spectral du filtre 3d. Ces deux sous-bandes spectrales, avec l'une qui est plus limitée que l'autre du côté des grandes valeurs de longueur d'onde, est la structure minimale de sous-bandes spectrales qui est nécessaire pour appliquer l'invention. Elle peut être complétée par toute(s) sous-bande(s) spectrale(s) additionnelle(s) à l'intérieur de la bande d'observation, telle(s) que l'un et/ou l'autre des intervalles spectraux des filtres 3a et 3c.

Les figures 2a, 3a et 4 montrent trois configurations optiques alternatives, pour disposer les filtres 3a-3d dans l'optique de prise de vues 1. Ces configurations sont équivalentes dans leur principe pour la mise en oeuvre de l'invention, lorsque la ou les matrice(s) de photodétecteurs 20 est(sont) utilisée(s) ou sélectionnée(s) de façon appropriée, comme il sera décrit plus loin.

Dans la première configuration qui est représentée à la figure 2a, les filtres 3a-3d peuvent être disposés alternativement sur le chemin des rayons lumineux qui parviennent sur la matrice 2. Un seul de ces filtres affecte simultanément le rayonnement qui est reçu par tous les photodétecteurs 20. Les filtres 3a-3d peuvent alors être échangés, afin que des images intermédiaires soient saisies successivement par la matrice 2 avec chaque filtre, pour la même portion de surface terrestre F. Pour cela, un mécanisme connu de l'Homme du métier est actionné entre deux saisies d'images intermédiaires, pour remplacer l'un des filtres 3a-3d par un autre. Dans cette configuration, chaque image intermédiaire qui est saisie peut recouvrir tous les photodétecteurs 20 de la matrice 2. Lorsqu'un diaphragme de champ est utilisé, l'image de ce diaphragme sur la matrice 2 définit un contour sur celle-ci, et chaque image intermédiaire recouvre tous les photodétecteurs 20 de la matrice 2 qui sont situés à l'intérieur de ce contour, pour chacune des sous-bandes spectrales.

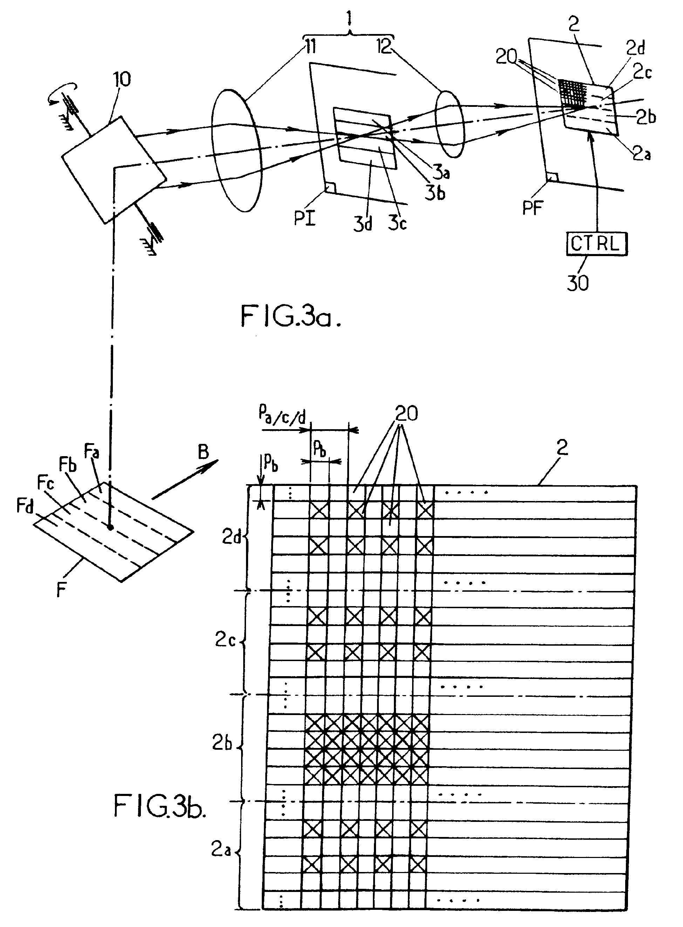

Dans la deuxième configuration qui est représentée à la figure 3a, les filtres 3a-3d sont fixes et disposés simultanément dans le plan de focalisation intermédiaire PI, en formant une partition de la vue de la portion F qui est formée dans ce plan par l'optique d'entrée 11. Cette partition est reproduite sur la matrice 2 par l'optique de refocalisation 12, de sorte que la matrice 2 apparaît divisée en portions séparées 2a-2d qui sont dédiées respectivement aux filtres 3a-3d. Ainsi, la portion 2a de la matrice 2 collecte le rayonnement de la sous-bande de couleur bleue, la portion 2b collecte le rayonnement de la sous-bande de couleur verte, la portion 2c collecte le rayonnement de la sous-bande de couleur jaune, et la portion 2d collecte le rayonnement de la sous-bande de couleur rouge. De préférence, les filtres 3a-3d ont des dimensions identiques, de sorte que les portions 2a-2d ont aussi des dimensions identiques à l'intérieur de la matrice 2. Les contours des portions 2a-2d de la matrice 2 sont alors déterminés par ceux des filtres 3a-3d. Lors d'une même exposition de la matrice 2, des portions différentes Fa-Fd de la surface terrestre, à l'intérieur de la portion F, sont imagées respectivement sur les portions 2a-2d de la matrice 2. Le défilement du satellite S permet de produire un balayage B qui décale les vues des portions de surface terrestre Fa-Fd par rapport aux portions de matrice 2a-2d. Ainsi, la vue de la portion de surface terrestre Fd est amenée sur la portion de matrice 2c pour une deuxième exposition, puis sur la portion de matrice 2b pour une troisième exposition, et enfin sur la portion de matrice 2a pour une quatrième exposition. Chacune des expositions produit donc une image intermédiaire de la portion de surface terrestre Fd, à travers un autre des filtres 3a-3d. En outre, chaque image intermédiaire recouvre tous les photodétecteurs 20 de la matrice 2 à l'intérieur du contour de la portion de matrice 2a-2d correspondante.

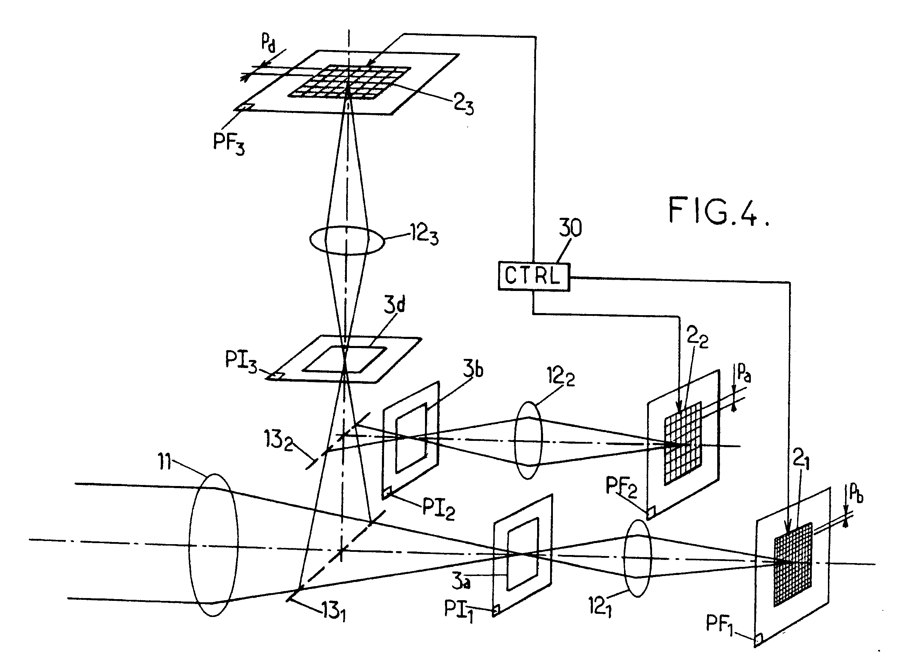

La troisième configuration qui est représentée à la figure 4 comprend des voies optiques séparées qui sont dédiées respectivement aux sous-bandes spectrales. Pour raison de clarté de cette figure, la voie optique qui est dédiée à la sous-bande de couleur jaune n'a pas été représentée, mais elle est identique dans son principe à celle qui est dédiée à la couleur rouge. L'optique d'entrée 11 peut être commune à toutes les voies, qui sont séparées ensuite par des lames semi-réfléchissantes $13_1$ et $13_2$ ou des séparateurs dichroïques. Ainsi, le plan focal PF est multiplié, avec les matrices de photodétecteurs $2_1$, $2_2$ et $2_3$ qui sont situées respectivement dans les plans focaux $PF_1$, $PF_2$ et $PF_3$. Les filtres 3a, 3b et 3d sont fixes et situés dans les plans de focalisation intermédiaires $PI_1$, $PI_2$ et $PI_3$, avec des optiques de refocalisation $12_1$, $12_2$ et $12_3$ pour conjuguer chaque plan de focalisation intermédiaire avec le plan focal correspondant. Dans ce cas, toutes les matrices de photodétecteurs sont commandées pour saisir en même temps les images intermédiaires de la même portion de surface terrestre F pour toutes les sous-bandes utilisées.

Enfin, la deuxième configuration présentée plus haut peut être combinée avec un mode d'acquisition de chaque image intermédiaire qui est de type TDI, pour «Time Delay Integration». Ce mode d'acquisition est supposé connu de l'Homme du métier, si bien que son fonctionnement n'est pas répété ici. Dans ce cas, chacune des matrices de photodétecteurs est du type TDI, et chaque image intermédiaire est saisie selon des phases d'accumulation et de lecture qui sont combinées avec des déplacements progressifs des vues de la scène F par rapport aux matrices, dans chacun des plans focaux.

De façon générale pour l'invention, chaque filtre qui détermine l'une des sous-bandes spectrales affecte tous les phodétecteurs 20 qui sont utilisés pour saisir l'image intermédiaire correspondante, en s'étendant continûment entre des points de la vue concernée qui sont imagés sur ces photodétecteurs. Cette configuration des filtres est opposée aux cas de filtres élémentaires de couleurs différentes qui sont associés à des photodétecteurs voisins d'une même matrice de photodétecteurs, selon un motif de répartition de ces filtres élémentaires.

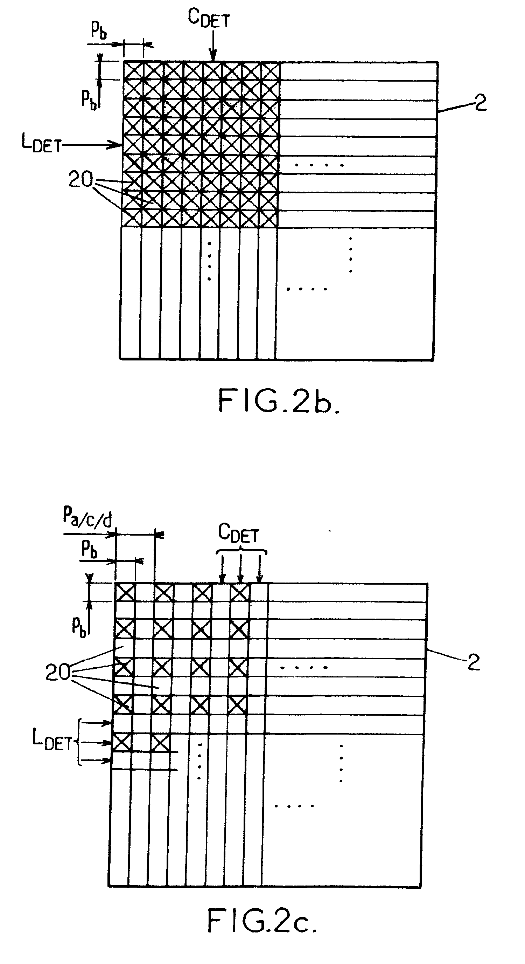

Dans chaque configuration, une unité de contrôle 30, qui est notée CTRL, commande les saisies des images intermédiaires par la (les) matrice(s) de photodétecteurs. Leur commande est synchronisée, selon le cas, avec un échange des filtres (figure 2a), le défilement du satellite S ou encore une variation de l'orientation du miroir 10 (figure 2b).

La matrice de photodétecteurs 20 qui est utilisée pour saisir l'image intermédiaire pour la première sous-bande spectrale, correspondant de préférence à la couleur verte, détermine une fréquence de Nyquist $\nu_{Nb}$. Cette fréquence de Nyquist est égale à $1/(2 \times p_b)$, où $p_b$ est le pas des photodétecteurs 20 de la matrice qui réalise l'échantillonnage de la vue associée au filtre 3b. Exprimée en termes de fréquence spatiale dans l'espace objet, la fréquence de Nyquist $\nu_{Nb}$ est égale à $1/(2 \times GSD)$.

Par ailleurs, l'optique de prise de vues 1 produit un filtrage passe-bas du contenu de la portion de surface terrestre F. Autrement dit, chaque vue qui est formée par l'optique 1 ne contient que l'information d'image correspondant à des fréquences spatiales qui sont inférieures à une fréquence de coupure.

De façon connue, une optique de prise de vues possède une pupille qui est à l'origine du filtrage des fréquences spatiales d'image qui sont transmises par cette optique. La fréquence de coupure de ce filtrage passe-bas de l'optique est une fonction croissante de la dimension pupillaire. Dans le cas présent d'imagerie spatiale, la pupille de l'optique de prise de vues 1 est fixée par le télescope 11, qui est le composant optique le plus encombrant de cette optique. Plus précisément, c'est le miroir d'entrée du télescope 11 qui limite le plus souvent la pupille, par la valeur de son diamètre.

La fréquence de coupure qui est ainsi produite par le télescope 11 dépend de la sous-bande spectrale du rayonnement filtré qui produit la vue concernée. Etant donné que la fréquence de coupure de l'optique 1 est une fonction décroissante de la longueur d'onde de rayonnement, la fréquence de coupure de l'optique 1, pour chacune des sous-bandes spectrales, dépend de la limite supérieure de cette sous-bande. Ainsi, la fréquence de coupure $\nu_{Cb}$ de l'optique de prise de vues 1 pour la première sous-bande qui contient la couleur verte, est supérieure à la fréquence de coupure $\nu_{Cc}$ ou $\nu_{Cd}$ pour l'une des sous-bandes qui contient la couleur jaune (filtre 3c) ou la couleur rouge (filtre 3d).

De façon usuelle, une optique de prise de vues est dimensionnée pour que sa fréquence spatiale de coupure $\nu_{Ci}$, pour chaque sous-bande spectrale i qui est utilisée, ne limite pas par elle-même l'information d'image plus que l'échantillonnage qui est réalisé par les photodétecteurs qui sont utilisés pour cette sous-bande spectrale. Autrement dit, l'Homme du métier choisit usuellement la dimension de la pupille de l'optique de prise de vues de sorte que sa fréquence spatiale de coupure soit supérieure à la fréquence de Nyquist pour toute la bande spectrale d'observation. Dans l'invention, l'optique 1 est sélectionnée pour satisfaire cette condition pour la première sous-bande spectrale, qui correspond à la couleur verte du filtre 3b : $\nu_{Nb} < \nu_{Cb}$.

Selon l'invention, l'optique 1 est sélectionnée en outre de sorte que sa fréquence spatiale de coupure pour au moins une autre sous-bande qui contient une longueur d'onde supérieure à la couleur verte, soit inférieure à la fréquence de Nyquist pour la couleur verte. Ainsi, par exemple : $\nu_{Cd} < \nu_{Nb} < \nu_{Cb}$, $\nu_{Cd}$ étant la fréquence spatiale de coupure de l'optique 1 pour la couleur rouge du filtre 3d. De cette façon, l'information d'image de couleur rouge qui est contenue dans la vue correspondante est limitée par l'optique 1, mais cette optique possède des dimensions qui sont substantiellement réduites.

La dimension de la pupille de l'optique de prise de vues 1 est sélectionnée en appliquant les principes qui sont connus, pour satisfaire la double inégalité précédente. Ainsi, selon l'invention, le diamètre de la pupille est choisi juste supérieur $H \times \lambda_{b\,max}/(2 \times GSD)$, et inférieur à $H \times \lambda_{r\,max}/(2 \times GSD)$, où :

> H est l'altitude du satellite S au dessus du sol terrestre ;
>
> $\lambda_{b\,max}$ est la longueur d'onde maximale de la première sous-bande spectrale, qui correspond de préférence à la couleur verte ;
>
> $\lambda_{r\,max}$ est la longueur d'onde maximale de la sous-bande spectrale étendue vers les grandes longueurs d'onde, qui peut correspondre à la couleur rouge ; et
>
> GSD est la résolution de l'image finale exprimée dans l'espace objet.

Par exemple, en appliquant l'invention à un instrument de prise de vues qui est embarqué à bord d'un satellite géostationnaire, une résolution de 10 m (mètre) au nadir pour l'image finale polychrome peut être obtenue avec une pupille circulaire de l'optique 1 dont le diamètre est compris entre 1,15 m et 1,25 m. Sans utiliser l'invention, le diamètre de pupille de l'optique 1 serait augmenté d'un facteur supérieur à deux.

Lorsque l'image intermédiaire correspondant à la sous-bande de couleur rouge est acquise avec la condition $\nu_{Cd} < \nu_{Nb}$, il n'est pas nécessaire que la fréquence de Nyquist pour cette sous-bande rouge soit égale à celle pour la sous-bande verte. Autrement dit, l'image intermédiaire de la sous-bande rouge peut être acquise avec une résolution qui est supérieure, ou moins fine, que la résolution de l'image intermédiaire de la sous-bande verte. Comme les vues sont formées par la même optique 1 pour toutes les sous-bandes spectrales, l'échantillonnage de la vue pour la sous-bande rouge peut être inférieur à celui qui est réalisé pour la sous-bande verte.

On décrit maintenant deux méthodes pour saisir les images intermédiaires respectives de la sous-bande verte et des autres sous-bandes spectrales avec des résolutions qui sont différentes. Dans ces exemples, l'image intermédiaire saisie pour la première sous-bande spectrale, verte, est formée en utilisant un pas d'échantillonnage de la vue correspondante, qui est deux fois plus petit qu'un autre pas d'échantillonnage utilisé pour saisir l'image intermédiaire d'une autre sous-bande spectrale plus étendue vers les grandes longueurs d'onde, par exemple rouge. Chaque matrice de photodétecteurs 20 est formée de lignes $L_{DET}$ et de colonnes $C_{DET}$ de photodétecteurs qui sont adjacentes, et tous les pas d'échantillonnage qui sont considérés sont mesurés parallèlement à ces lignes et colonnes de photodétecteurs.

Les figures 2b et 2c illustrent la première méthode pour la configuration de la figure 2a, lorsqu'une même matrice 2 est utilisée pour saisir toutes les images intermédiaires. Elles représentent cette matrice 2, avec chaque case qui est un photodétecteur 20. Dans ces figures, les photodétecteurs 20 qui sont marqués d'une croix sont utilisés pour saisir l'image intermédiaire de la vue correspondante, et ceux qui ne sont pas marqués d'une croix ne sont pas utilisés, c'est-à-dire que les valeurs d'intensité qu'ils saisissent ne sont pas transmises. La figure 2b correspond à l'utilisation de la matrice 2 pour la sous-bande verte du filtre 3b : tous les photodétecteurs 20 sont utilisés. La figure 2c correspond à l'utilisation de la même matrice 2 pour la sous-bande jaune du filtre 3c ou la sous-bande rouge du filtre 3d : les photodétecteurs 20 qui sont utilisés sont restreints à une sélection de un sur deux le long des lignes $L_{DET}$ et des colonnes $C_{DET}$. De cette façon, l'échantillonnage pour la sous-bande spectrale verte correspond à une densité surfacique qui est quatre fois plus importante que l'échantillonnage pour les sous-bandes spectrales jaune et rouge. Dans les figures 2b et 2c, $p_b$ désigne le pas d'échantillonnage pour la couleur verte, et $p_{c/d}$ celui pour la couleur jaune ou rouge. Un avantage de ce mode de saisie des images intermédiaires autres que celle associée à la couleur verte, en n'utilisant qu'un photodétecteur 20 sur quatre, est de réduire la diaphonie («cross-talk» en anglais) qui peut intervenir entre des photodétecteurs 20 qui sont voisins dans la matrice 2. Il en résulte une amélioration de la contribution des photodétecteurs dans la fonction de transfert de modulation totale de l'instrument de prise de vues.

La figure 3b illustre une transposition de cette première méthode de saisie des images intermédiaires pour la configuration de la figure 3a. Lors d'une même exposition de la matrice 2, tous les photodétecteurs 20 sont lus à l'intérieur de la portion 2b, correspondant au filtre 3b de la sous-bande verte, et un seul photodétecteur 20 sur quatre n'est lu ou transmis à l'intérieur des portions 2a, 2c et 2d correspondant aux autres sous-bandes.

La deuxième méthode de saisie des images intermédiaires est applicable lorsque des matrices de photodétecteurs séparées sont utilisées pour des sous-bandes qui sont différentes, comme dans la configuration de la figure 4. Dans ce cas, la matrice de photodétecteurs

$2_1$ qui est utilisée pour la sous-bande verte peut posséder un pas $p_b$ qui est égal à la moitié du pas $p_d$ de la matrice $2_3$ qui est utilisée pour la sous-bande rouge : $p_b = 0,5 \times p_d$. Dans ce cas où tous les photodétecteurs 20 de chaque matrice sont utilisés pour saisir les images intermédiaires, les pas d'échantillonnage sont identiques aux largeurs individuelles des lignes $L_{DET}$ et des colonnes $C_{DET}$ de photodétecteurs de ces matrices. L'échantillonnage de la vue pour la sous-bande verte correspond alors encore à une densité surfacique qui est quatre fois plus importante que l'échantillonnage de la vue pour la sous-bande spectrale rouge.

Plus généralement, l'échantillonnage de la vue pour la première sous-bande spectrale correspond de préférence à une densité surfacique qui est quatre fois plus importante que l'échantillonnage de la vue pour la sous-bande spectrale qui est plus étendue vers les grandes valeurs de longueur d'onde.

Etant donné que la résolution GSD est égale au pas des photodétecteurs 20 divisé par la distance focale de l'optique de prise de vues 1, et multiplié par l'altitude de prise de vue, la résolution de l'image intermédiaire qui est saisie pour la couleur verte est deux fois plus petite, ou plus fine, que celle de l'image intermédiaire qui est saisie pour la couleur rouge. Par exemple, lorsque la résolution est égale à 10 m pour la couleur verte, elle peut ainsi être égale à 20 m pour la couleur rouge.

Lorsqu'une image intermédiaire est aussi saisie pour la sous-bande spectrale qui correspond à la couleur bleue, elle est saisie de préférence en utilisant le même pas d'échantillonnage que pour la sous-bande jaune ou rouge, c'est-à-dire deux fois plus grand que celui qui est utilisé pour saisir l'image intermédiaire de la sous-bande verte. Autrement dit : $p_a = p_c = p_d$.

Dans ces conditions, les images intermédiaires des couleurs bleue, jaune et rouge correspondent chacune à quatre fois moins de données d'image que l'image intermédiaire de la couleur verte. Ainsi, une durée de transmission entre l'émetteur qui est à bord du satellite S et le récepteur terrestre R (figure 1), pour une image finale polychrome, est réduite par rapport au cas où toutes les images intermédiaires, monochromes, auraient la même résolution, c'est-à-dire celle qui est associée à la couleur verte. Plus généralement, les données d'image intermédiaire qui sont transmises entre l'émetteur et le récepteur pour la première sous-bande spectrale correspondent à quatre fois plus de signaux de lecture de photodétecteurs que les données d'image intermédiaire qui sont transmises pour la sous-bande spectrale étendue vers les grandes longueurs d'onde, pour la même scène qui est saisie dans toutes les sous-bandes spectrales.

L'unité de reconstruction d'image fusionne alors les images intermédiaires de toutes les sous-bandes spectrales, pour obtenir l'image finale polychrome. Des procédés de fusion d'images qui sont connus de l'Homme du métier peuvent être utilisés. L'image finale possède alors la résolution la plus fine parmi les résolutions respectives de toutes les images intermédiaires. Ainsi, l'image finale possède la résolution de l'image intermédiaire qui est associée à la couleur verte. De plus, le rendu visuel polychrome de cette image finale reconstruite, qui est apporté par les autres couleurs, apparaît conforme à sa résolution car la couleur verte correspond sensiblement au maximum de la sensibilité spectrale de l'oeil humain.

**Revendications**

1.  Procédé d'imagerie polychrome dans la bande spectrale d'observation de 360 nm à 950 nm, comprenant les étapes suivantes :

    /1/ embarquer une optique de prise de vues (1) à bord d'un aéronef ou d'un satellite (S), ladite optique de prise de vues comprenant un télescope (11) et étant adaptée pour former des vues dans au moins un plan focal (PF) respectivement à partir de rayonnements appartenant à plusieurs sous-bandes spectrales comprises chacune dans la bande spectrale d'observation ;
    /2/ placer au moins une matrice ($2_1$,..., $2_n$) de photodétecteurs (20) dans ledit au moins un plan focal, pour saisir une image intermédiaire de chaque vue formée par l'optique de prise de vues avec une résolution associée à ladite image intermédiaire ;
    /3/ saisir les images intermédiaires d'une même scène (F) respectivement pour chaque sous-bande spectrale ; et
    /4/ fusionner les images intermédiaires saisies respectivement pour les sous-bandes spectrales, afin de former une image finale polychrome,

    le télescope (11) de l'optique de prise de vues (1) déterminant une pupille commune aux sous-bandes spectrales, et une dimension de ladite pupille commune fixant une fréquence spatiale de coupure différente pour chaque sous-bande spectrale,
    les sous-bandes spectrales comprenant une première sous-bande spectrale et au moins une autre sous-bande spectrale étendue vers les grandes longueurs d'onde, avec ladite autre sous-bande spectrale étendue vers les grandes longueurs d'onde qui possède au moins une longueur d'onde plus grande qu'une limite supérieure de ladite première sous-bande spectrale, la pupille du télescope (11) étant dimensionnée de sorte que la fréquence spatiale de coupure pour la première sous-bande spectrale soit supérieure à la fréquence de Nyquist de l'image intermédiaire saisie pour ladite première sous-bande spectrale,
    chaque sous-bande spectrale étant déterminée par un seul filtre (3a-3d) qui affecte tous les phodétecteurs (20) qui sont utilisés pour saisir l'image intermédiaire correspondante, en s'étendant continûment entre des points de la vue concernée qui sont imagés sur ces photodétecteurs,
le procédé étant **caractérisé en ce que** la pupille du télescope (11) est en outre dimensionnée pour que la fréquence spatiale de coupure pour ladite autre sous-bande spectrale étendue vers les grandes longueurs d'onde, soit inférieure à la fréquence de Nyquist de l'image intermédiaire qui est saisie pour ladite première sous-bande spectrale,
et **en ce que** l'image intermédiaire saisie pour la première sous-bande spectrale est formée en utilisant un pas d'échantillonnage ($p_b$) de la vue correspondante, qui est deux fois plus petit qu'un autre pas d'échantillonnage ($p_d$) utilisé pour saisir l'image intermédiaire de l'autre sous-bande spectrale étendue vers les grandes longueurs d'onde, les dits pas d'échantillonnage étant mesurés parallèlement à des lignes ($L_{DET}$) et des colonnes ($C_{DET}$) des photodétecteurs (20), de sorte que l'échantillonnage pour ladite première sous-bande spectrale corresponde à une densité surfacique quatre fois plus importante que l'échantillonnage pour ladite autre sous-bande spectrale étendue vers les grandes longueurs d'onde.

2.  Procédé selon la revendication 1, suivant lequel la première sous-bande spectrale comprend la longueur d'onde 550 nm.

3.  Procédé selon la revendication 1 ou 2, suivant lequel l'image finale polychrome possède une résolution égale à la résolution de l'image intermédiaire saisie pour la première sous-bande spectrale.

4.  Procédé selon l'une quelconque des revendications précédentes, suivant lequel la première sous-bande spectrale correspond à une couleur verte, l'autre sous-bande spectrale étendue vers les grandes longueurs d'onde correspond à une couleur rouge, et encore une autre sous-bande spectrale correspond à une couleur bleue.

5.  Procédé selon l'une quelconque des revendications précédentes, suivant lequel les lignes ($L_{DET}$) et les colonnes ($C_{DET}$) des photodétecteurs (20) sont adjacentes dans chaque matrice (2) de photodétecteurs utilisée, et suivant lequel l'image intermédiaire saisie pour la première sous-bande spectrale est obtenue en utilisant tous les photodétecteurs de la matrice utilisée pour ladite première sous-bande spectrale, et suivant lequel l'image intermédiaire saisie pour ladite autre sous-bande spectrale étendue vers les grandes longueurs d'onde est obtenue en sélectionnant un photodétecteur sur deux le long des lignes et des colonnes des photodétecteurs de la matrice utilisée pour ladite autre sous-bande spectrale.

**6.** Procédé selon l'une quelconque des revendications 1 à 4, suivant lequel la matrice $(2_1)$ de photodétecteurs (20) utilisée pour saisir l'image intermédiaire de ladite première sous-bande spectrale possède une largeur de ligne $(L_{DET})$ et de colonne $(C_{DET})$ qui est deux fois plus petite qu'une largeur de ligne et de colonne de la matrice $(2_3)$ de photodétecteurs utilisée pour saisir l'image intermédiaire de ladite autre sous-bande spectrale étendue vers les grandes longueurs d'onde.

**7.** Procédé selon la revendication 4 et l'une quelconque des revendications précédentes, suivant lequel l'image intermédiaire saisie pour la sous-bande spectrale correspondant à la couleur bleue est basée sur le même pas d'échantillonnage $(p_d)$ que pour ladite autre sous-bande spectrale étendue vers les grandes longueurs d'onde, correspondant à la couleur rouge, et deux fois plus grand que le pas d'échantillonnage $(p_b)$ utilisé pour saisir l'image intermédiaire de la première sous-bande spectrale, correspondant à la couleur verte.

**8.** Procédé selon l'une quelconque des revendications précédentes, dans lequel la scène (F) dont les images intermédiaires sont saisies à l'étape /3/ est une portion de surface de la Terre (T).

**9.** Procédé selon l'une quelconque des revendications précédentes, suivant lequel des données d'image intermédiaire sont transmises entre l'aéronef ou le satellite (S) et une station de réception (R) pour chaque sous-bande spectrale, les données d'image intermédiaire transmises pour la première sous-bande spectrale correspondant à quatre fois plus de signaux de lecture de photodétecteurs (20) que les données d'image intermédiaire transmises pour l'autre sous-bande spectrale étendue vers les grandes longueurs d'onde, pour la même scène (F) saisie dans toutes les sous-bandes spectrales.

**10.** Système d'imagerie polychrome adapté pour être embarqué à bord d'un aéronef ou d'un satellite (S), ledit système comprenant :

- une optique de prise de vues (1) comprenant un télescope (11) et adaptée pour former des vues dans au moins un plan focal (PF), respectivement à partir de rayonnements appartenant à des sous-bandes spectrales comprises chacune dans la bande spectrale d'observation de 360 nm à 950 nm ;
- au moins une matrice $(2_1,..., 2_n)$ de photodétecteurs (20) située dans ledit au moins un plan focal, adaptée pour saisir une image intermédiaire de chaque vue avec une résolution associée à ladite image intermédiaire ;
- une unité de commande (30) adaptée pour contrôler une saisie des images intermédiaires d'une même scène (F) respectivement pour chaque sous-bande spectrale ; et
- une unité de reconstruction d'image adaptée pour fusionner les images intermédiaires saisies respectivement pour les sous-bandes spectrales, afin de former une image finale polychrome,

le télescope (11) de l'optique de prise de vues (1) déterminant une pupille commune aux sous-bandes spectrales, et une dimension de ladite pupille commune fixant une fréquence spatiale de coupure différente pour chaque sous-bande spectrale,

le système étant adapté pour fixer une première des sous-bandes spectrales et une autre des dites sous-bandes spectrales qui est étendue vers les grandes longueurs d'onde, avec ladite autre sous-bande spectrale étendue vers les grandes longueurs d'onde qui possède au moins une longueur d'onde plus grande qu'une limite supérieure de ladite première sous-bande spectrale, la pupille du télescope (11) étant dimensionnée de sorte que la fréquence spatiale de coupure pour la première sous-bande spectrale soit supérieure à la fréquence de Nyquist de l'image intermédiaire saisie pour ladite première sous-bande spectrale,

chaque sous-bande spectrale étant déterminée par un seul filtre (3a-3d) qui affecte tous les phodétecteurs (20) qui sont utilisés pour saisir l'image intermédiaire correspondante, en s'étendant continûment entre des points de la vue concernée qui sont imagés sur ces photodétecteurs,

le système étant **caractérisé en ce que** la pupille du télescope (11) est en outre dimensionnée pour que la fréquence spatiale de coupure pour ladite autre sous-bande spectrale étendue vers les grandes longueurs d'onde, soit inférieure à la fréquence de Nyquist de l'image intermédiaire qui est saisie pour ladite première sous-bande spectrale,

et **en ce que** le système est adapté en outre pour saisir les images intermédiaires selon des pas d'échantillonnage des vues correspondantes, respectivement pour les sous-bandes spectrales, avec le pas d'échantillonnage $(p_b)$ utilisé pour la première sous-bande spectrale qui est deux fois plus petit que le pas d'échantillonnage $(p_d)$ utilisé pour saisir l'image intermédiaire de l'autre sous-bande spectrale étendue vers les grandes longueurs d'onde, les dits pas d'échantillonnage étant mesurés parallèlement à des lignes $(L_{DET})$ et des colonnes $(C_{DET})$ des photodétecteurs (20), de sorte que l'échantillonnage pour ladite première sous-bande spectrale corresponde à une densité surfacique quatre fois plus importante que l'échantillonnage pour ladite autre sous-bande spectrale étendue vers les grandes longueurs d'onde.

**11.** Système selon la revendication 10, adapté de sorte que la première sous-bande spectrale comprenne la longueur d'onde 550 nm.

**12.** Système selon la revendication 10 ou 11, dans lequel l'unité de reconstruction d'image est adaptée de sorte que l'image finale polychrome possède une résolution égale à la résolution de l'image intermédiaire saisie pour la première sous-bande spectrale.

**13.** Système selon l'une quelconque des revendications 10 à 12, adapté de sorte que la première sous-bande spectrale corresponde à une couleur verte, l'autre sous-bande spectrale étendue vers les grandes longueurs d'onde corresponde à une couleur rouge, et encore une autre sous-bande spectrale corresponde à une couleur bleue.

**14.** Système selon l'une quelconque des revendications 10 à 13, dans lequel les lignes ($L_{DET}$) et les colonnes ($C_{DET}$) des photodétecteurs (20) sont adjacentes dans chaque matrice (2) de photodétecteurs, et dans lequel l'unité de commande (30) est adaptée pour saisir l'image intermédiaire pour la première sous-bande spectrale en utilisant tous les photodétecteurs de la matrice utilisée pour ladite première sous-bande spectrale, et pour saisir l'image intermédiaire pour ladite autre sous-bande spectrale étendue vers les grandes longueurs d'onde en sélectionnant un photodétecteur sur deux le long des lignes et des colonnes des photodétecteurs de la matrice utilisée pour ladite autre sous-bande spectrale.

**15.** Système selon l'une quelconque des revendications 10 à 13, suivant lequel la matrice ($2_1$) de photodétecteurs utilisée pour saisir l'image intermédiaire de ladite première sous-bande spectrale possède une largeur de ligne ($L_{DET}$) et de colonne ($C_{DET}$) qui est deux fois plus petite qu'une largeur de ligne et de colonne de la matrice ($2_3$) de photodétecteurs utilisée pour saisir l'image intermédiaire de ladite autre sous-bande spectrale étendue vers les grandes longueurs d'onde.

**16.** Système selon la revendication 13 et l'une quelconque des revendications 10 à 15, adapté pour saisir l'image intermédiaire de la sous-bande spectrale correspondant à la couleur bleue en utilisant le même pas d'échantillonnage ($p_d$) que pour ladite autre sous-bande spectrale étendue vers les grandes longueurs d'onde, correspondant à la couleur rouge, et deux fois plus grand que le pas d'échantillonnage ($p_b$) utilisé pour saisir l'image intermédiaire de la première sous-bande spectrale, correspondant à la couleur verte.

**17.** Système selon l'une quelconque des revendications 10 à 16, comprenant en outre :

- un émetteur agencé pour transmettre des données d'image intermédiaire pour chaque sous-bande spectrale, à partir de signaux de lecture des photodétecteurs (20) ; et
- un récepteur agencé pour recevoir les dites données d'image intermédiaire transmises par l'émetteur, et pour délivrer les dites données d'image intermédiaire à l'unité de reconstruction d'image,

le système étant adapté de sorte que les données d'image intermédiaire transmises entre l'émetteur et le récepteur (R) pour la première sous-bande spectrale correspondent à quatre fois plus de signaux de lecture de photodétecteurs (20) que les données d'image intermédiaire transmises pour l'autre sous-bande spectrale étendue vers les grandes longueurs d'onde, pour la même scène (F) saisie dans toutes les sous-bandes spectrales.

**Patentansprüche**

**1.** Polychromatisches Bildgebungsverfahren in der spektralen Beobachtungsbandbreite von 360 nm bis 950 nm, umfassend die folgenden Schritte:

/1/ das Mitführen einer Ansichtenaufnahmeoptik (1) an Bord eines Flugzeugs oder eines Satelliten (S), wobei die Ansichtenaufnahmeoptik ein Teleskop (11) umfasst und ausgestaltet ist, Ansichten in zumindest einer Fokalebene (PF) jeweils anhand von Strahlungen auszubilden, die zu mehreren spektralen Subbandbreiten gehören, die jede in der spektralen Beobachtungsbandbreite enthalten sind;
/2/ das Anordnen zumindest einer Matrix ($2_1$, ..., $2_n$) von Photodetektoren (20) in der zumindest einen Fokalebene, um ein Zwischenbild jeder durch die Ansichtenaufnahmeoptik gebildeten Ansicht mit einer dem Zwischenbild zugeordneten Auflösung zu erfassen;
/3/ das Erfassen der Zwischenbilder einer gleichen Szene (F) jeweils für jede spektrale Subbandbreite und
/4/ das Vereinigen der jeweils für die spektralen Subbandbreiten erfassten Zwischenbilder, um ein polychromatisches Endbild auszubilden,

wobei das Teleskop (11) der Ansichtenaufnahmeoptik (1) eine gemeinsame Pupille der spektralen Subbandbreiten bestimmt und eine Abmessung der gemeinsamen Pupille eine für jede spektrale Subbandbreite unterschiedliche Grenzortsfrequenz vorgibt, wobei die spektralen Subbandbreiten eine erste spektrale Subbandbreite und zumindest eine weitere, sich hin zu den großen Wellenlängen erstreckende spektrale Subbandbreite umfassen, wobei die weitere, sich hin zu den großen Wellenlängen erstreckende spektrale Subbandbreite zumindest eine Wellenlänge aufweist, die größer ist als ein oberer Grenzwert der ersten spektralen Subbandbreite, wobei die Pupille des Teleskops (11) so dimensioniert ist, dass die Grenzortsfrequenz für die erste spektrale Subbandbreite größer ist als die Nyquist-Frequenz des für die erste spektrale Subbandbreite erfassten Zwischenbilds,

wobei jede spektrale Subbandbreite durch einen einzigen Filter (3a - 3d) bestimmt wird, der alle für die Erfassung des entsprechenden Zwischenbilds genutzten Photodetektoren (20) betrifft, indem er sich kontinuierlich zwischen Punkten der betreffenden Ansicht, die auf diesen Photodetektoren abgebildet sind, erstreckt,

wobei das Verfahren **dadurch gekennzeichnet ist, dass** die Pupille des Teleskops (11) ferner so dimensioniert ist, dass die Grenzortsfrequenz für die weitere, sich hin zu den großen Wellenlängen erstreckende spektrale Subbandbreite kleiner ist als die Nyquist-Frequenz des für die erste spektrale Subbandbreite erfassten Zwischenbilds,

und dadurch, dass das für die erste spektrale Subbandbreite erfasste Zwischenbild gebildet wird, indem ein Abtastschritt ($p_b$) der entsprechenden Ansicht genutzt wird, der halb so groß ist wie ein weiterer Abtastschritt ($p_d$), der für die Erfassung des Zwischenbilds der weiteren, sich hin zu den großen Wellenlängen erstreckenden spektralen Subbandbreite genutzt wird, wobei die Abtastschritte parallel zu Zeilen ($L_{DET}$) und Spalten ($C_{DET}$) der Photodetektoren (20) so gemessen werden, dass die Abtastung für die erste spektrale Subbandbreite einer viermal größeren Flächendichte als die Abtastung für die weitere, sich hin zu den großen Wellenlängen erstreckende spektrale Subbandbreite entspricht.

2. Verfahren nach Anspruch 1, wobei die erste spektrale Subbandbreite die Wellenlänge 550 nm umfasst.

3. Verfahren nach Anspruch 1 oder 2, wobei das polychromatische Endbild eine Auflösung aufweist, die gleich der Auflösung des für die erste spektrale Subbandbreite erfassten Zwischenbilds ist.

4. Verfahren nach einem der vorangehenden Ansprüche, wobei die erste spektrale Subbandbreite einer grünen Farbe entspricht, die weitere, sich hin zu den großen Wellenlängen erstreckende spektrale Subbandbreite einer roten Farbe entspricht und noch eine weitere spektrale Subbandbreite einer blauen Farbe entspricht.

5. Verfahren nach einem der vorangehenden Ansprüche, wobei die Zeilen ($L_{DET}$) und die Spalten ($C_{DET}$) der Photodetektoren (20) in jeder genutzten Photodetektorenmatrix (2) aneinander angrenzen und wobei das für die erste spektrale Subbandbreite erfasste Zwischenbild erhalten wird, indem alle Photodetektoren der für die erste spektrale Subbandbreite genutzten Matrix genutzt werden, und wobei das für die weitere, sich hin zu den großen Wellenlängen erstreckende spektrale Subbandbreite erfasste Zwischenbild erhalten wird, indem jeder zweite Photodetektor entlang der Zeilen und der Spalten der Photodetektoren der für die weitere spektrale Subbandbreite genutzten Matrix ausgewählt wird.

6. Verfahren nach einem der Ansprüche 1 bis 4, wobei die Matrix ($2_1$) der Photodetektoren (20), die für die Erfassung des Zwischenbilds der ersten spektralen Subbandbreite genutzt wird, eine Breite der Zeilen ($L_{DET}$) und Spalten ($C_{DET}$) aufweist, die halb so groß ist wie eine Zeilen- und Spaltenbreite der Photodetektorenmatrix ($2_3$), die für die Erfassung des Zwischenbilds der weiteren, sich hin zu den großen Wellenlängen erstreckenden spektralen Subbandbreite genutzt wird.

7. Verfahren nach Anspruch 4 und einem der vorangehenden Ansprüche, wobei das Zwischenbild, das für die spektrale Subbandbreite, die der blauen Farbe entspricht, erfasst wurde, auf demselben Abtastschritt ($p_d$) wie für die weitere, sich hin zu den großen Wellenlängen erstreckende spektrale Subbandbreite, die der roten Farbe entspricht, und auf dem Doppelten des Abtastschritts ($p_b$), der für die Erfassung des Zwischenbilds der ersten spektralen Subbandbreite, die der grünen Farbe entspricht, genutzt wird, basiert.

8. Verfahren nach einem der vorangehenden Ansprüche, wobei die Szene (F), deren Zwischenbilder in Schritt /3/ erfasst werden, ein Oberflächenabschnitt der Erde (T) ist.

9. Verfahren nach einem der vorangehenden Ansprüche, wobei die Zwischenbilddaten für jede spektrale Subbandbreite zwischen dem Flugzeug bzw. dem Satelliten (S) und einer Empfangsstation (R) übertragen werden, wobei für dieselbe, in allen spektralen Subbandbreiten erfasste Szene (F) die für die erste spektrale Subbandbreite übertragenen Zwischenbilddaten viermal mehr Lesesignalen von Photodetektoren (20) entsprechen als die für die weitere, sich hin zu den großen Wellenlängen erstreckende spektrale Subbandbreite übertragenen Zwischenbilddaten.

10. Polychromatisches Bildgebungssystem, das für die Mitführung an Bord eines Flugzeugs oder eines Satelliten (S) ausgestaltet ist, umfassend:

    - eine Ansichtenaufnahmeoptik (1), die ein Teleskop (11) umfasst und ausgestaltet ist, Ansichten in zumindest einer Fokalebene (PF) jeweils anhand von Strahlungen auszubilden, die zu spektralen Subbandbreiten gehören, die jede in der spektralen Beobachtungsbandbreite von 360 nm bis 950 nm enthalten sind;

- zumindest eine Matrix ($2_1$, ..., $2_n$) von Photodetektoren (20), die in der zumindest einen Fokalebene angeordnet und ausgestaltet ist, ein Zwischenbild jeder Ansicht mit einer dem Zwischenbild zugeordneten Auflösung zu erfassen;

- eine Steuerungseinheit (30), die ausgestaltet ist, eine Erfassung der Zwischenbilder einer gleichen Szene (F) jeweils für jede spektrale Subbandbreite zu steuern; und

- eine Bildwiederherstellungseinheit, die ausgestaltet ist, die jeweils für die spektralen Subbandbreiten erfassten Zwischenbilder zu vereinigen, um ein polychromatisches Endbild auszubilden,

wobei das Teleskop (11) der Ansichtenaufnahmeoptik (1) eine gemeinsame Pupille der spektralen Subbandbreiten bestimmt und wobei eine Abmessung der gemeinsamen Pupille eine für jede spektrale Subbandbreite unterschiedliche Grenzortsfrequenz vorgibt,

wobei das System ausgestaltet ist, eine erste der spektralen Subbandbreiten und eine weitere der spektralen Subbandbreiten, die sich hin zu den großen Wellenlängen erstreckt, vorzugeben, wobei die weitere, sich hin zu den großen Wellenlängen erstreckende spektrale Subbandbreite zumindest eine Wellenlänge aufweist, die größer ist als ein oberer Grenzwert der ersten spektralen Subbandbreite, wobei die Pupille des Teleskops (11) so dimensioniert ist, dass die Grenzortsfrequenz für die erste spektrale Subbandbreite größer ist als die Nyquist-Frequenz des für die erste spektrale Subbandbreite erfassten Zwischenbilds,

wobei jede spektrale Subbandbreite durch einen einzigen Filter (3a - 3d) bestimmt wird, der alle für die Erfassung des entsprechenden Zwischenbilds genutzten Photodetektoren (20) betrifft, indem er sich kontinuierlich zwischen Punkten der betreffenden Ansicht, die auf diesen Photodetektoren abgebildet sind, erstreckt,

wobei das System **dadurch gekennzeichnet ist, dass** die Pupille des Teleskops (11) ferner so dimensioniert ist, dass die Grenzortsfrequenz für die weitere, sich hin zu den großen Wellenlängen erstreckende spektrale Subbandbreite kleiner ist als die Nyquist-Frequenz des für die erste spektrale Subbandbreite erfassten Zwischenbilds,

und dadurch, dass das System ferner ausgestaltet ist, die Zwischenbilder in Abhängigkeit von Abtastschritten der entsprechenden Ansichten jeweils für die spektralen Subbandbreiten zu erfassen, wobei der Abtastschritt ($p_b$), der für die erste spektrale Subbandbreite genutzt wird, halb so groß ist wie der Abtastschritt ($p_d$), der für die Erfassung des Zwischenbilds der weiteren, sich hin zu den großen Wellenlängen erstreckenden spektralen Subbandbreite genutzt wird, wobei die Abtastschritte parallel zu Zeilen ($L_{DET}$) und Spalten ($C_{DET}$) der Photodetektoren (20) so gemessen werden, dass die Abtastung für die erste spektrale Subbandbreite einer viermal größeren Flächendichte als die Abtastung für die weitere, sich hin zu den großen Wellenlängen erstreckende spektrale Subbandbreite entspricht.

11. System nach Anspruch 10, das derart ausgestaltet ist, dass die erste spektrale Subbandbreite die Wellenlänge 550 nm umfasst.

12. System nach Anspruch 10 oder 11, wobei die Bildwiederherstellungseinheit derart ausgestaltet ist, dass das polychromatische Endbild eine Auflösung aufweist, die gleich der Auflösung des für die erste spektrale Subbandbreite erfassten Zwischenbilds ist.

13. System nach einem der Ansprüche 10 bis 12, das derart ausgestaltet ist, dass die erste spektrale Subbandbreite einer grünen Farbe entspricht, die weitere, sich hin zu den großen Wellenlängen erstreckende spektrale Subbandbreite einer roten Farbe entspricht und noch eine weitere spektrale Subbandbreite einer blauen Farbe entspricht.

14. System nach einem der Ansprüche 10 bis 13, wobei die Zeilen ($L_{DET}$) und die Spalten ($C_{DET}$) der Photodetektoren (20) in jeder Photodetektorenmatrix (2) aneinander angrenzen und wobei die Steuerungseinheit (30) ausgestaltet ist, das Zwischenbild für die erste spektrale Subbandbreite zu erfassen, indem alle Photodetektoren der für die erste spektrale Subbandbreite genutzten Matrix genutzt werden, und das Zwischenbild für die weitere, sich hin zu den großen Wellenlängen erstreckende spektrale Subbandbreite zu erfassen, indem jeder zweite Photodetektor entlang der Zeilen und Spalten der Photodetektoren der für die weitere spektrale Subbandbreite genutzten Matrix ausgewählt wird.

15. System nach einem der Ansprüche 10 bis 13, wobei die Photodetektorenmatrix ($2_1$), die für die Erfassung des Zwischenbilds der ersten spektralen Subbandbreite genutzt wird, eine Breite der Zeilen ($L_{DET}$) und Spalten ($C_{DET}$) aufweist, die halb so groß ist wie eine Zeilen- und Spaltenbreite der Photodetektorenmatrix ($2_3$), die für die Erfassung des Zwischenbilds der weiteren, sich hin zu den großen Wellenlängen erstreckenden spektralen Subbandbreite genutzt wird.

16. System nach Anspruch 13 und einem der Ansprüche 10 bis 15, das ausgestaltet ist, das Zwischenbild der spektralen Subbandbreite, die der blauen Farbe entspricht, zu erfassen, indem derselbe Abtastschritt ($p_d$) wie für die weitere, sich hin zu den großen Wellenlängen erstreckende spektrale Subbandbreite, die der roten Farbe entspricht, und das Doppelte des Abtastschritts ($p_b$), der für die Erfassung des Zwischenbilds der ersten spektralen Subbandbreite, die der grünen Farbe entspricht, genutzt wird.

17. System nach einem der Ansprüche 10 bis 16, ferner umfassend:

- einen Sender, der angeordnet ist, Zwischenbilddaten für jede spektrale Subbandbreite anhand von Lesesignalen der Photodetektoren (20) zu übertragen; und
- einen Empfänger, der angeordnet ist, die vom Sender übertragenen Zwischenbilddaten zu empfangen und die Zwischenbilddaten der Bildwiederherstellungseinheit bereitzustellen,

wobei das System derart ausgestaltet ist, dass für dieselbe, in allen spektralen Subbandbreiten erfasste Szene (F) die zwischen dem Sender und dem Empfänger (R) für die erste spektrale Subbandbreite übertragenen Zwischenbilddaten viermal mehr Lesesignalen von Photodetektoren (20) entsprechen als die für die weitere, sich hin zu den großen Wellenlängen erstreckende spektrale Subbandbreite übertragenen Zwischenbilddaten.

**Claims**

1. Polychromatic imaging method in the observation spectral band of 360 nm to 950 nm, comprising the following steps:

/1/ carrying an image-capturing optical system (1) on board an aircraft or spacecraft (S), said image-capturing optical system comprising a telescope (11) and being adapted to form views in at least one focal plane (PF), respectively based on radiation within several spectral sub-bands each contained within the observation spectral band;
/2/ placing at least one array ($2_1$,..., $2_n$) of photodetectors (20) in said at least one focal plane, in order to capture an intermediate image of each view formed by the image-capturing optical system at a resolution associated with said intermediate image;
/3/ capturing the intermediate images of a same scene (F) respectively for each spectral sub-band; and
/4/ merging the intermediate images captured respectively for the spectral sub-bands, in order to form a final polychromatic image,

the telescope (11) of the image-sensing optical system (1) determining a pupil which is common to the spectral sub-bands, and a dimension of said common pupil setting a spatial cutoff frequency which is different for each spectral sub-band,
the spectral sub-bands comprising a first spectral sub-band and at least one other spectral sub-band extending towards the large wavelengths, with said other spectral sub-band extending towards the large wavelengths having at least one wavelength larger than an upper limit of said first spectral subband, the pupil of the telescope (11) being sized so that the spatial cutoff frequency for the first spectral sub-band is greater than the Nyquist frequency of the intermediate image captured for said first spectral sub-band, each spectral sub-band being determined by a single filter (3a-3d) which is effective for all the photodetectors (20) used for capturing the corresponding intermediate image, by extending continuously between points of the view of concern which are imaged on these photodetectors,
the method being **characterized by** the pupil of the telescope (11) additionally being sized so that the spatial cutoff frequency for said other spectral sub-band extending towards the large wavelengths, is less than the Nyquist frequency of the intermediate image captured for said first spectral sub-band,
and in that the intermediate image captured for the first spectral sub-band is formed using a sampling pitch ($p_b$) for the corresponding view which is two times smaller than another sampling pitch ($p_d$) used to capture the intermediate image for the other spectral sub-band extending towards the large wavelengths, said sampling pitches being measured parallel to the rows ($L_{DET}$) and columns ($C_{DET}$) of photodetectors (20), so that the sampling for said first spectral sub-band corresponds to a surface density four times greater than in the sampling for said other spectral sub-band extending towards the large wavelengths.

2. Method according to claim 1, wherein the first spectral sub-band comprises the 550 nm wavelength.

3. Method according to claim 1 or 2, wherein the final polychromatic image has a resolution equal to the resolution of the intermediate image captured for the first spectral sub-band.

4. Method according to any one of the above claims, wherein the first spectral sub-band corresponds to a green color, the other spectral sub-band extending towards the large wavelengths corresponds to a red color, and yet another spectral sub-band corresponds to a blue color.

**5.** Method according to any one of the preceding claims, wherein the rows ($L_{DET}$) and columns ($C_{DET}$) of the photodetectors (20) are adjacent in each array (2) of photodetectors used, and wherein the intermediate image captured for the first spectral sub-band is obtained using all the photodetectors of the array used for said first spectral sub-band, and wherein the intermediate image captured for said other spectral sub-band extending towards the large wavelengths is obtained by selecting one photodetector out of two along the rows and columns of the photodetectors of the array used for said other spectral sub-band.

**6.** Method according to any one of the claims 1 to 4, wherein the array ($2_1$) of photodetectors (20) used to capture the intermediate image for said first spectral sub-band has a row width ($L_{DET}$) and column width ($C_{DET}$) which is two times smaller than a row width and column width of the array ($2_3$) of photodetectors used to capture the intermediate image for said other spectral sub-band extending towards the large wavelengths.

**7.** Method according to claim 4 and any one of the preceding claims, wherein the intermediate image captured for the spectral sub-band corresponding to the blue color is based on the same sampling pitch ($p_d$) as said other spectral sub-band extending towards the large wavelengths, corresponding to the red color, and two times larger than the sampling pitch ($p_b$) used to capture the intermediate image for the first spectral sub-band, corresponding to the green color.

**8.** Method according to any one of the above claims, wherein the scene (F) for which the intermediate images are captured in step /3/ is a portion of the Earth's surface (T).

**9.** Method according to any one of the above claims, wherein intermediate image data are transmitted between the aircraft or spacecraft (S) and a receiving station (R) for each spectral sub-band, the intermediate image data transmitted for the first spectral sub-band corresponding to four times more signals read from the photodetectors (20) than the intermediate image data transmitted for the other spectral sub-band extending towards the large wavelengths, for the same scene (F) captured in all the spectral sub-bands.

**10.** Polychromatic imaging system adapted for being carried on board an aircraft or spacecraft (S), said system comprising:

    - an image-capturing optical system (1) comprising a telescope (11) and adapted to form views in at least one focal plane (PF), respectively based on radiation within several spectral sub-bands each contained within the observation spectral band of 360 nm to 950 nm;
- at least one array ($2_1$,..., $2_n$) of photodetectors (20) located in said at least one focal plane, adapted to capture an intermediate image of each view at a resolution associated with said intermediate image;
- a control unit (30) adapted to control respective captures of intermediate images of a same scene (F) for each spectral sub-band; and
- an image reconstruction unit adapted to merge the intermediate images captured respectively for the spectral sub-bands, in order to form a final polychromatic image,

the telescope (11) of the image-capturing optical system (1) determining a pupil which is common to the spectral sub-bands, and a dimension of said common pupil setting a spatial cutoff frequency which is different for each spectral sub-band,
the system being adapted to set a first of the spectral sub-bands and another of said spectral sub-bands which extends towards the large wavelengths, with said other spectral sub-band extending towards the large wavelengths having at least one wavelength larger than an upper limit of said first spectral sub-band, the pupil of the telescope (11) being sized so that the spatial cutoff frequency for the first spectral sub-band is greater than the Nyquist frequency of the intermediate image captured for said first spectral sub-band,
each spectral sub-band being determined by a single filter (3a-3d) which is effective for all the photodetectors (20) used for capturing the corresponding intermediate image, by extending continuously between points of the view of concern which are imaged on these photodetectors,
said system being **characterized in that** the pupil of the telescope (11) is additionally sized so that the spatial cutoff frequency for said other spectral sub-band extending towards the large wavelengths, is less than the Nyquist frequency of the intermediate image captured for said first spectral sub-band, and **in that** the system is also adapted to capture intermediate images according to sampling pitches of the corresponding views respectively for the spectral sub-bands, with the sampling pitch ($p_b$) used for the first spectral sub-band being two times smaller than the sampling pitch ($p_d$) used to capture the intermediate image for the other spectral sub-band extending towards the large wavelengths, said sampling pitches being measured parallel to the rows ($L_{DET}$) and columns ($C_{DET}$) of photodetectors (20), so that the sampling for said first spectral sub-band corresponds to a surface density four times greater than in the sampling for said other spectral sub-band extending towards the large wavelengths.

11. System according to claim 10, adapted so that the first spectral sub-band includes the 550 nm wavelength.

12. System according to claim 10 or 11, wherein the image reconstruction unit is adapted so that the final polychromatic image has a resolution equal to the resolution of the intermediate image captured for the first spectral sub-band.

13. System according to any one of claims 10 to 12, adapted so that the first spectral sub-band corresponds to a green color, the other spectral sub-band extending towards the large wavelengths corresponds to a red color, and yet another spectral sub-band corresponds to a blue color.

14. System according to any one of claims 10 to 13, wherein the rows ($L_{DET}$) and columns ($C_{DET}$) of the photodetectors (20) are adjacent in each array (2) of photodetectors, and wherein the control unit (30) is adapted to capture the intermediate image for the first spectral sub-band using all the photodetectors of the array used for said first spectral sub-band, and to capture the intermediate image for said other spectral sub-band extending towards the large wavelengths by selecting one photodetector out of two along the rows and columns of the photodetectors of the array used for said other spectral sub-band.

15. System according to any one of claims 10 to 13, wherein the array ($2_1$) of photodetectors used to capture the intermediate image for said first spectral sub-band has a row width ($L_{DET}$) and column width ($C_{DET}$) which is two times smaller than a row width and column width of the array ($2_3$) of photodetectors used to capture the intermediate image for said other spectral sub-band extending towards the large wavelengths.

16. System according to claim 13 and any one of claims 10 to 15, adapted to capture the intermediate image for the spectral sub-band corresponding to the blue color using the same sampling pitch ($p_d$) as for said other spectral sub-band extending towards the large wavelengths, corresponding to the red color, and two times larger than the sampling pitch ($p_b$) used to capture the intermediate image for the first spectral sub-band, corresponding to the green color.

17. System according to any one of claims 10 to 16, additionally comprising:

- a transmitter arranged to transmit intermediate image data for each spectral sub-band, from signals read from the photodetectors (20); and
- a receiver arranged to receive said intermediate image data transmitted by the transmitter, and to deliver said intermediate image data to the image reconstruction unit,

the system being adapted so that the intermediate image data transmitted between the transmitter and the receiver (R) for the first spectral sub-band correspond to four times more signals read from the photodetectors (20) than in the intermediate image data transmitted for the other spectral sub-band extending towards the large wavelengths, for the same scene (F) captured in all the spectral sub-bands.

FIG.1.

FIG.2a.

FIG.2b.

FIG.2c.

FIG.3a.

FIG.3b.

FIG.4.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3971065 A
- US 20090051984 A
- US 2006054782 A
- JP 5066370 A